Europäisches Patentamt

European Patent Office

Office européen des brevets

(19)

(11) Veröffentlichungsnummer : **0 158 656**
**B1**

(12) ## EUROPÄISCHE PATENTSCHRIFT

(45) Veröffentlichungstag der Patentschrift :
03.01.90

(21) Anmeldenummer : 84903529.0

(22) Anmeldetag : 02.10.84

(86) Internationale Anmeldenummer :
PCT/CH 84/00163

(87) Internationale Veröffentlichungsnummer :
WO/8501493 (11.04.85 Gazette 85/09)

(51) Int. Cl.⁵ : **B 65 G   1/04**

(54) LAGEREINRICHTUNG.

(30) Priorität : 03.10.83 CH 5369/83
04.06.84 CH 2709/84

(43) Veröffentlichungstag der Anmeldung :
23.10.85 Patentblatt 85/43

(45) Bekanntmachung des Hinweises auf die Patenterteilung : 03.01.90 Patentblatt 90/01

(84) Benannte Vertragsstaaten :
AT BE CH DE FR GB LI LU NL SE

(56) Entgegenhaltungen :
DE–A– 2 348 793
DE–C–   937 040
FR–A– 2 126 104
US–A– 3 593 823
US–A– 4 016 987

(73) Patentinhaber : Sieber, Hans
Alpsteinstrasse 4
CH-9524 Zuzwil (CH)

(72) Erfinder : Sieber, Hans
Alpsteinstrasse 4
CH-9524 Zuzwil (CH)

(74) Vertreter : Kulhavy, Sava, Dipl.-Ing.
Patentanwaltsbüro S.V. Kulhavy Postfach 450 Kornhausstrasse 3
CH-9001 St. Gallen (CH)

EP 0 158 656 B1

Jouve, 18, rue St-Denis, 75001 Paris, France

# Beschreibung

Die vorliegende Erfindung betrifft eine Lagereinrichtung mit wenigstens einer Reihe von Lagergestellen und mit einem Stapelgerät zur Bedienung dieser Gestelle, das ein entlang den Lagergestellen bewegbares und eine Plattform tragendes Fahrwerk aufweist, wobei die Plattform mit einem vertikal verstellbaren Lastträger versehen ist, der in Richtung gegen die Fächer der Lagergestelle hin und von diesen weg bewegt werden kann, und wobei der Lastträger wenigsten zwei Lagen in einer horizontalen Ebene gegenüber dem Fahrwerk einnehmen kann.

Eine Einrichtung dieser Gattung ist aus DE-C-937040 bereits bekannt. Diese vorbekannte Einrichtung ist mit einem auf der Oberseite von zwei Lagergestellen bewegbaren Kranwangen ausgerüstet. In diesem Kranwangen ist eine Katze verfahrbar, die eine Kreisbahn aufweist. Auf dieser Kreisbahn ist ein ein Lastaufnahmemittel tragendes Hubgestell drehbar gelagert. Mit Hilfe des Lastaufnahmemittels kann entweder das links oder das rechts stehende Gestell bedient werden. Es sind Endschalter vorgesehen, welche verhindern sollen, dass das Stapelgut oder/und der Hubstapler an den Gestellen beschädigt werden, wenn es Fehlschaltungen in den Antrieben des Hubstaplers geben sollte.

Es kann jedoch auch Lageranlagen geben, in welchen nur eine Reihe von Lagergestellen vorhanden ist. In sochen Anlagen kann die vorbekannte Einrichtung nicht verwendet werden, weil dem Kranwagen die Abstützung eines seiner Enden fehlen würde.

Eine der Aufgaben der vorliegenden Erfindung ist, eine Lagereinrichtung für die Lagerung vor allem von grossflächigen Gegenständen zu entwerfen, bei der der genannte Nachteil sowie noch weitere Nachteile nicht vorkommen.

Diese Aufgabe wird bei der Lagereinrichtung der eingangs genannten Gattung erfindungsgemäss so gelöst, wie dies im kennzeichnenden Teil des Anspruchs 1 definiert ist.

Nachstehend wird die vorliegende Einrichtung anhand der beiliegenden Zeichnungen näher erläutert. Es zeigt:

Fig. 1 in Seitenansicht die vorliegende Einrichtung mit einem Stapelgerät, das sich zwischen Lagergestellen befindet, die zu den beiden Seiten des Ganges der Einrichtung angeordnet sind,

Fig. 2 in Draufsicht einen Ausschnitt aus der Einrichtung gemäss Fig. 1,

Fig. 3 in Draufsicht und schematisch die Verteilung der Lagergestelle in der Einrichtung nach Fig. 1,

Fig. 4 in Seitenansicht die vorliegende Einrichtung mit einem Stapelgerät, das nur eine einzige Reihe von Lagergestellen bedient,

Fig. 5 in Draufsicht einen Ausschnitt aus der Einrichtung gemäss Fig. 4.

Fig. 6 in Draufsicht und schematisch die Verteilung der Lagergestelle in der Einrichtung nach Fig. 4.

Fig. 7 schematisch eine erste Ausführung von beideseitig zum Hubmast wirkenden Zinken des Lastträgers,

Fig. 8 schematisch eine zweite Ausführung von beidseitig wirkenden Zinken,

Fig. 9 in Seitenansicht und schematisch einen Lastträger, der um die Hubsäule herum drehbar ist,

Fig. 10 schematisch den Antrieb des Lastträgers,

Fig. 11 in Seitenansicht einen Ausschnitt aus dem Lagergestell, wobei dieser Ausschnitt die Verankerung eines der Kragarme des Gestelles an einem der Holme des Gestelles im Einzelnen zeigt,

Fig. 12 in Frontansicht den Auschnitt nach Fig. 11,

Fig. 13 in einer Seitenansicht die vorliegende Einrichtung, die Verlängerungsschienen unter den Gestellen aufweist und Fig. 14 in Draufsicht einen Ausschnitt aus der Einrichtung gemäss Fig. 14.

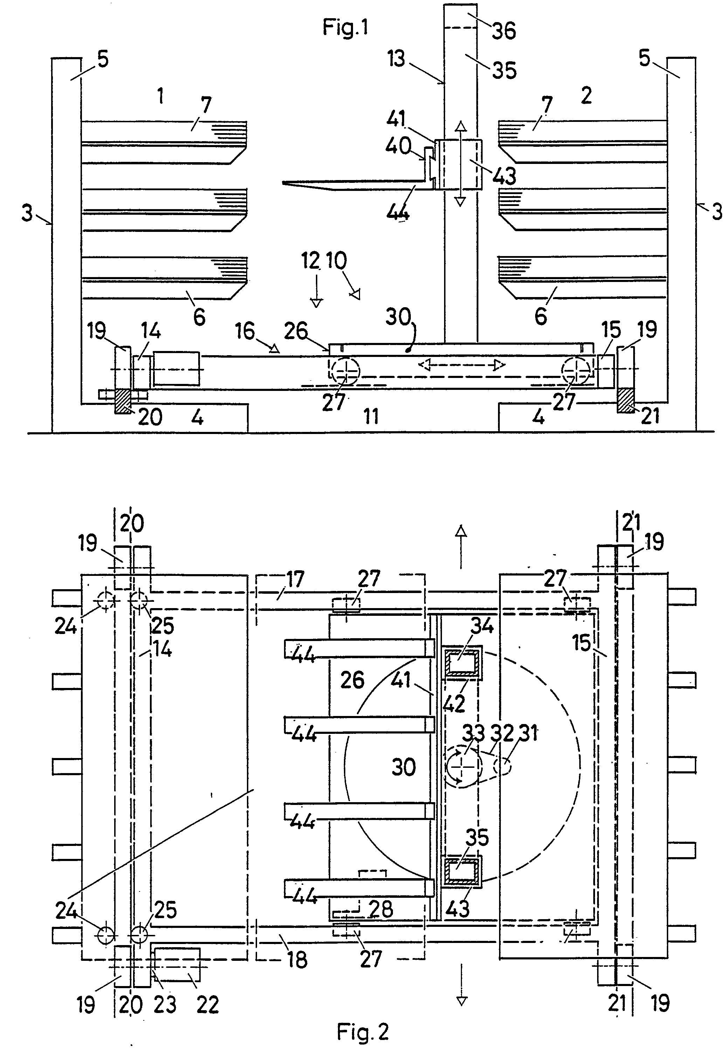

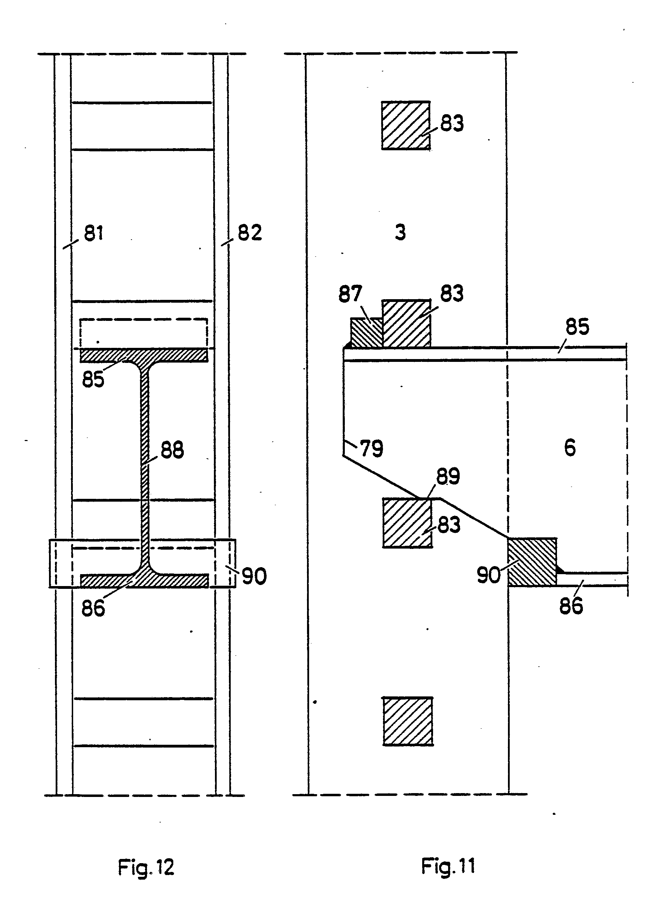

Fig. 1 zeigt eine Lagereinrichtung, die zwei parallel verlaufende Reihen von Lagergestellen 1 und 2 aufweist. Jedes Gestell 1 bzw. 2 enthält etwa L-förmige Stützen 3, deren horizontaler Schenkel 4 auf dem Boden aufliegt. In den vertikalen Schenkeln 5 sind Kragarme 6 verankert, auf welchen das Lagergut 7 ruht. Diese Verankerung wird im Zusammenhang mit Fig. 11 und 12 näher beschrieben werden. Im hier behandelten Fall stellt das Lagergut Blechtafeln dar, die Stapel bilden.

Die Lagereinrichtung enthält ferner ein Stapelgerät 10, das sich zwischen den zwei genannten Reihen von Lagergestellen 1 und 2 befindet. Dieses Stapelgerät 10 ist in einem Gang 11 verfahrbar, der seitlich durch die Lagergestelle 1 und 2 mit dem Lagergut 7 begrenzt ist. Das Stapelgerät 10 weist ein Fahrwerk 12 sowie einen Hubmast 13 auf. Das Fahrwerk 12 des Stapelgerätes 10 ist flach ausgebildet und die gegenüberliegenden Endpartien 14 und 15 dieses Fahrwerkes 12 liegen unter den Fächern des jeweiligen Lagergestelles 1 bzw. 2, die durch die Kragarme 6 gebildet sind.

Das Fahrwerk 12 weist einen Rahmen 16 auf, bei dem wenigstens die Schienen 17 und 18, die die Endabschnitte 14 und 15 des Rahmens 16 miteinander verbinden, im Profil U-förmig sind. Das U-Profil öffnet sich nach innen. Die Endpartien 14 und 15 des Rahmens 16 sind mit Rädern 19 versehen, die auf Schienen 20 und 21 rollen. Diese Schienen 20 und 21 erstrecken sich in der Richtung der Reihen der Lagergestelle 1 und 2. Die Räder 20 und 21 sind durch Motoren 22 angetrieben, die über ein Untersetzungsgetriebe 23 an die Räder 19 angeschlossen sind. Die linke Endpartie 14 des Rahmens 16 ist an gegenüberliegenden Enden derselben mit auf den Seitenflächen der Schiene 20 aufliegenden Führungsrollen 24 und 25 versehen. Diese Führungsrollen 24 und 25 stellen sicher, dass die Laufräder 19 die Schienen 20 und 21 nicht verlassen, auch bei grösseren seitlichen Belastungen des Stapelgerätes 10. Dank einer derartigen Anordnung ist der Rahmen 16 als ein Ganzes entlang den Lagergestellen 1 und 2 sicher und leicht bewegbar.

Das Fahrwerk 12 weist ferner eine Plattform 26 auf, die im wesentlichen flach ausgebildet ist. Im Bereich der seitlichen Schienen 17 und 18 des Rahmens 16 ist die Plattform 26 mit Rädern 27 versehen, die sich im Inneren der seitlich geöffneten U-Schienen 17 und 18 befinden und die mittels Motoren 28 an der Plattform 26 antreibbar sind. Diese Räder 27 ermöglichen, dass sich die Plattform 26 entlang den U-förmigen Schienen 17 und 18 und somit auch senkrecht zur Bewegungsrichtung des Rahmens 16 bewegen kann.

In der Plattform 26 ist eine Bühne 30 drehbar gelagert. Dieser ist ein Antrieb zugeordnet, der nur in Fig. 2 dargestellt ist. Der Antrieb ethält einen Motor 31, der über eine Kette bzw. einen Riemen 32 mit einer Scheibe 33 verbunden ist, die an der Achse der Bühne 30 befestigt ist.

Auf der Bühne 30 ist der Hubmast 13 aufgerichtet. Dieser enthält zwei kastenförmige und auf der Bühne 30 nebeneinander befestigte Säulen 34 und 35, die als Hubsäulen dienen. Oben sind diese Säulen 34 und 35 mittels eines ebenfalls hohlen Verbindungsstückes 36 miteinander verbunden. Entlang den Hubsäulen 34 und 35 ist ein Lastträger 40 bewegbar. Dieser Lastträger 40 enthält einen Längsträger 41, der an viereckigen Hülsen 42 und 43 befestigt ist. Diese Hülsen 42 und 43 führen den Längsträger 41 entlang den Hubsäulen 34 und 35. Am Längsträger 41 sind Zinken 44 befestigt, die zur Aufnahme von Lagergut 7 bestimmt sind.

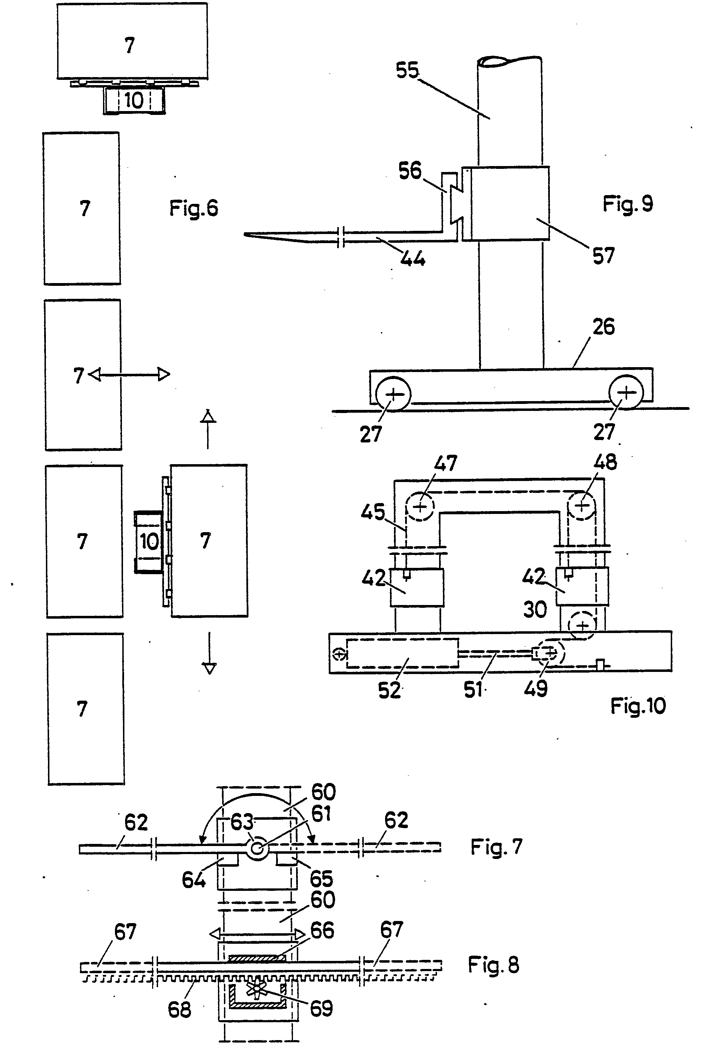

Eine beispielsweise Ausführung des Antriebs für den Lastträger 40 ist aus Fig. 10 ersichtlich. An die Hülsen 42 und 43 ist je ein Zugorgan 45 bzw. 46, wie z. B. ein Seil, eine Kette oder dgl. einerends angeschlossen. Solche Zugorgane 45 und 46 sind über Umlenkrollen 47 und 48 in das Innere der Bühne 30 geführt, wo ihr anderes End befestigt ist. Die Zugorgane 45 und 46 sind jedoch über eine Rolle 49 geführt, die an der Zugstange 51 eines Hubzylinders 52 angebracht ist. Beim Einziehen der Stange 51 in den Zylinder 52 wird Zug auf die Zugorgane 45 und 46 ausgeübt und die Hülsen 42 und 43 samt den an diesen angeschlossenen Zinken 44 werden aufwärts bewegt, und umgekehrt.

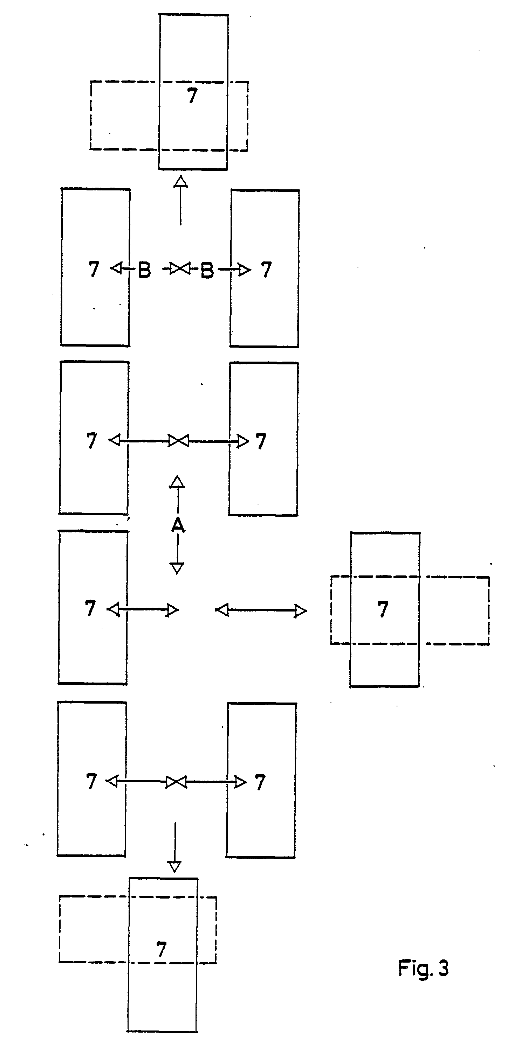

In Fig. 3 ist die Verteilung der Lagergestelle entsprechend der Abbildung nach Fig. 1 und 2 durch die Darstellung der in den Lagergestellen gelagerten Blechtafeln 7 angedeutet. Zwischen den zwei Reihen von Gestellen mit den Blechpaketen 7 befindet sich der Gang 11, in dem sich der Rahmen 16 des Stapelgerätes 10 auf den Schienen 20 und 21 bewegen kann. Die Bewegung des Stapelgerätes 10 in der Längsrichtung des Ganges 11 ist in Fig. 3 mit dem Doppelpfeil A angedeutet. Auf dem Niveau zweier gegenüberliegenden Gestelle mit Blechtafeln 7 kann das Stapelgerät 10 anhalten und jetzt kann sich die Plattform 26 in Richtung gegen die Blechtafeln 7 hin bewegen. Die Möglichkeit dieser Bewegung der Plattform 26 samt den auf dieser angebrachten Bestandteilen der vorliegenden Einrichtung ist mit den Doppelpfeilen B angedeutet.

Bei einem wie beschrieben ausgebildeten Stapelgerät 10 kann die Breite des Ganges 11 nur ein wenig grösser sein als die Tiefe des Lastträgers 40 plus die Tiefe der Hubsäule 34 bzw. 35. Dies deswegen, damit die Enden der Zinken 44 oder der Hubmast 13 das gelagerte Gut 7 nicht streifen. Bei diesem Stapelgerät 10 fällt die Fahrt des bekannten Hubstaplers in die Kurve weg, weil die Einstellung der Zinken 44 zur Entnahme des Lagergutes 7 oder zur Ablagerung desselben mit Hilfe der an Ort und Stelle drehbaren Bühne 30 erfolgt. Beim vorliegenden Stapelgerät 10 ist ferner keine Karosserie vorhanden, die bei den Hubstaplern verhältnismässig hoch und lang ist und beim Drehen des Hubstaplers zusätzlichen Platz im Gang des Lagers in Anspruch nimmt. Das Fahrwerk 12 des vorliegenden Stapelgerätes 10 ist extrem flach, da es ja nur einen flachen Rahmen 16 aufweist, in dem die Bühne 30 zudem noch versenkt ist. Deswegen können die Endabschnitte 14 und 15 des Rahmens 16 im Bereich der Fächer 6 der Lagergestelle 1 und 2 untergebracht werden, ohne dass sie dabei viel Lagerplatz für sich beanspruchen.

Die erforderliche Stabilität gewinnt das Stapelgerät 10 durch eine ausreichende Breite und Länge des Rahmens 16. Der Breite des Rahmens 16 sind bei der vorliegenden Einrichtung praktisch keine besonderen Grenzen gesetzt, weil der Gang lang ist. Die Länge des Rahmens 16 ist durch den Abstand der vertikalen Holme 5 der L-förmigen Stützen 3 voneinander begrenzt. Je tiefer die Fächer 6 in den Gestellen 1 und 2 sind, um so grösser ist die Hebelwirkung der Last auf die Zinken 44. Um so länger kann man jedoch auch den Rahmen 16 ausbilden und dadurch diese Belastung gleich auch kompensieren.

Während der Fahrt des Stapelgerätes 10 durch den Gang 11 befindet sich die Plattform 26 in einer ihrer Endstellungen auf dem Rahmen 16. In Fig. 1 und 2 befindet sich die Plattform in ihrer rechten Endstellung, während die Zinken 44 nach links gerichtet sind. In dieser Stellung kann das Stapelgerät 10 Blechtafeln 7 einem der Fächer 6 im linken Gestell 1 entnehmen, und zwar je nach der Höheneinstellung des Lastträgers 40. Die Höhe des Lastträgers 40 lässt sich mit jener Vorrichtung einstellen, die in Fig. 10 schematisch dargestellt ist.

Wenn man jetzt das Lagergut 7 dem rechts stehenden Gestell 2 entnehmen will, dann schalter man den Motor 31 für den Antrieb der Bühne 30 und zugleich auch die Motoren 28 für den Vorschub der Plattform 26 ein. Während sich der Lastträger 40 wegen der Drehung der Bühne 30 in seine rechts liegende Stellung in derselben horizontalen Ebene dreht, verschiebt sich die Plattform 26 im Rahmen 16 zugleich nach links. Dadurch wird die Zunahme der Abmessung des Hubmastes 3 in Richtung nach rechts kompensiert.

Manchmal ist man gezwungen, auf die Drehbühne zu verzichten, und trotzdem möchte man beidseitig des Ganges 11 angeordnete Lagergestelle 1 und 2 mit dem Stapelgerät bedienen. Dann kann man direkt auf der Plattform 26 (Fig. 9) einen Hubmast 55 mit rundem Querschnitt befestigen. Entlang diesem Hubmast 55 ist ein Lastträger 56 bewegbar, der diesmal allerdings nur eine einzige den Hubmast 55 umgebende Hülse 57 aufweist. An dieser Hülse 57 kann der bereits beschriebene Lasttisch mit einem Längsträger und den an diesem befestigten Zinken 44 angebracht sein. Zur Bedienung eines der rechts stehenden Gestelle 2 wird die Hülse 56 samt dem Lasttisch nach rechts gedreht, wobei zugleich die Plattform 26 auf den Rädern 27 nach links bewegt wird.

In Fällen, in welchen sehr breite Gegenstände gehandhabt werden sollen, müssen viele Zinken nebeneinander angeordnet sein. Dann ist es zweckmässig, mehrere kastenförmige Hubsäulen nebeneinander anzuordnen, damit das Gut auf seiner ganzen Breite unterstützt ist. Eine grössere Anzahl von Hubsäulen kann nicht gut auf einer Drehbühne aufgestellt sein. Damit man auch in sochen Fällen Gestelle beidseitig des Ganges bedienen kann, kann der Lastträger mit umklappbaren Zinken versehen sein. In den nebeneinander stehenden Hubsäulen 60 (Fig. 7) ist eine Achse 61 gelagert. Die innere Endpartie der Zinken 62 ist mit einem Auge 63 versehen, durch welches die Achse 61 hindurchgeht. Zu den beiden Seiten der Achse 61 sind zwischen den Hubsäulen 60 horizontale Anschläge 64 und 65 befestigt, auf die die Zinken 62 aufliegen können. Je nach dem, welche Reihe von Gestellen 1 oder 2 bedient werden soll, klappt man die Zinken auf die entsprechnde Seite um.

In Fig. 8 ist eine andere Ausführung von in genannten Fällen verwendbaren Zinken dargestellt. Zwischen den Hubsäulen 60 ist eine Hülse 66 befestigt, durch die ein Zinken 67 hindurchgeht. Dieser ist mit einer Zahnung 68 auf seiner Unterseite versehen. In das Innere der Hülse 66 greift ein angetriebenes Zahnrad 69 ein, das mit der Zahnung am Zinken 67 kämmt. Je nach dem, ob man die Gestelle 1 bzw. 2 links oder rechts bedienen will, verschiebt man die Zinken 67 nach links oder nach rechts.

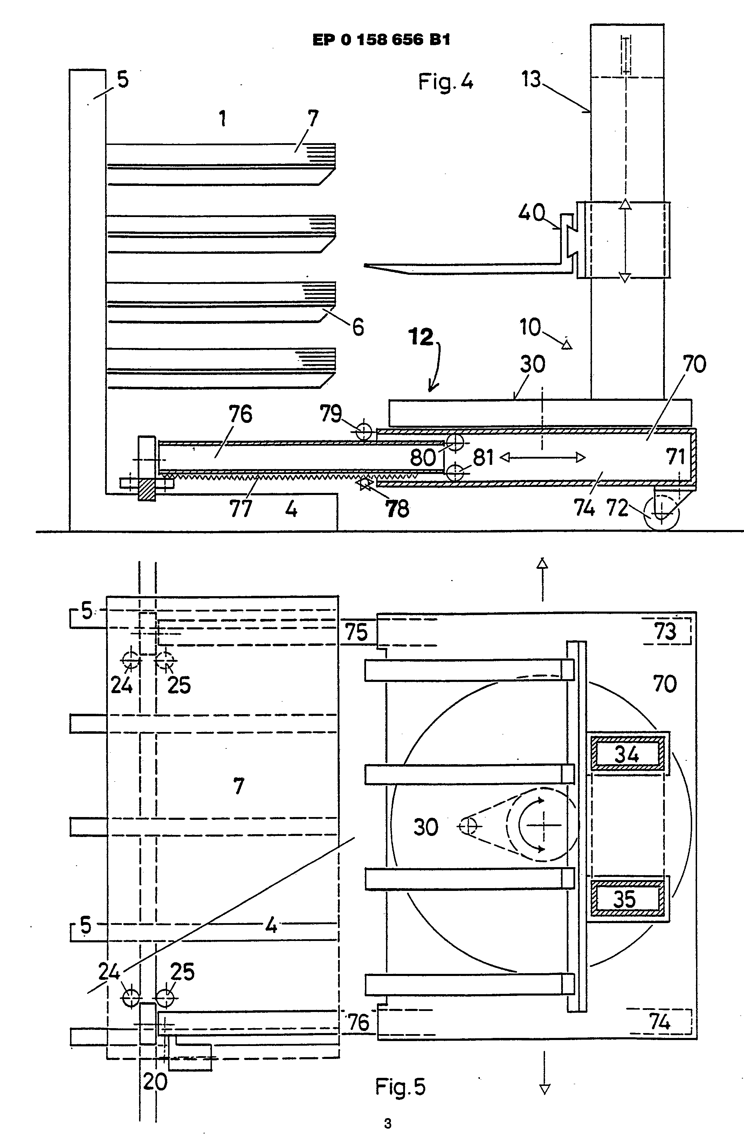

Es ist jedoch auch eine Lagereinrichtung möglich, die bloss eine Reihe von Lagergestellen aufweist, während an der anderen Seite der Bahn, entlang welcher sich das Stapelgerät bewegt, beispielsweise Maschinen angeordnet sein können, die das in den Lagergestellen gelagerte Gut gleich be- oder verarbeiten. Auch in solchen Fällen ist es wünschenswert, dass die Lagereinrichtung für sich möglichst wenig Bodenfläche beansprucht. Eine dieser Forderung entsprechende Lagereinrichtung ist in Fig. 4 bis 6 dargestellt. Bestandteile dieser Lagereinrichtung, die mit den Bestandteilen jener Lagereinrichtung identisch sind, die in Fig. 1 bis 3 dargestellt ist, sind mit denselben Bezugsziffern versehen.

Die Lagereinrichtung gemäss Fig. 4 bis 6 enthält nur die linke Reihe von Gestellen 1, entlang welchen das Stapelgerät 10 verfahrbar ist. Die sich unter den rechts stehenden Gestellen 2 befindliche Schiene 21 der Einrichtung nach Fig. 1 bis 3 kann jetzt wegfallen. Der Rahmen 70 des Stapelgerätes 10 ist auf der Unterseite seiner rechten Endpartie 71 mit Schwenkrollen 72 versehen, die direkt auf der Bodenoberfläche rollen können.

Im Prinzip könnte der Rahmen 70 bei dieser Ausführungsform der vorliegenden Erfindung im übrigen gleich wie bei der Einrichtung nach Fig. 1 bis 3 ausgeführt sein. Unter Umständen kann es jedoch zweckmässig sein, den Rahmen teleskopisch auszuführen. An den Seitenpartien des Rahmens 70 sind Gehäuse 73 und 74 angebracht, die zur Aufnahme der einen Endpartie von Stangen 75 und 76 dienen, deren andere Endpartie der Schiene 20 so zugeordnet ist, wie dies im Zusammenhang mit Fig. 1 bis 3 bereits beschrieben worden ist. Die untere Seite der Stangen 75 und 76 ist mit Zähnen 77 versehen, die mit je einem Ritzel 78 in Eingriff stehen. Diese Ritzel greifen in das jeweilige Gehäuse 73 bzw. 74 ein und sie sind von Motoren angetrieben, die zum Querantrieb des Fahrwerkes des Stapelgerätes 10 dienen. In den Gehäusen 73 und 74 befinden sich Rollen 79, 80 und 81, die den sich im Inneren des Gehäuses 73 bzw. 74 befindlichen Abschnitt der Stangen 75 und 76 führen.

Auf dem Rahmen 70 ist die bereits früher beschriebene Drehbühne 30 aufgesetzt. Die Entnahme von Lagergut 7 bzw. die Versorgung desselben in den Gestellen 1 erfolgt in der bereits beschriebenen Weise, wobei die Führung des Stapelgerätes 10 entlang den Gestellen 1 mit Hilfe der Schiene 20 und in Richtung der Tiefe derselben mit Hilfe der teleskopischen Mittel 73 und 75 bzw. 74 und 76 erfolgt.

In Fig. 6 sind neben einer Reihe von Gestellen mit dem Lagergut 7 auch zwei mögliche Stellungen des Stapelgerätes 10 angedeutet. Der Hubmast des Stapelgerätes 10, der zwei Hubsäulen 34 und 35 enthält, kann nach der Entnahme einer bestimmten Menge von Lagergut 7 aus dem nächstliegenden Gestell um seine vertikale Achse um 180 Grad geschwenkt werden, ohne dass das Stapelgerät 10 sich bewegt. In dieser Lage kann das Lagergut 7 entweder an ein Transportmittel oder an eine das Gut verarbeitende Maschine abgegeben werden. Das Stapelgerät 10 kann jedoch auch bis an das in Fig. 6 oben dargestellte Ende der Gestelle fahren und erst dort das Gut 7 absetzen oder aufnehmen.

Auch bei dieser Ausführungsform des Stapelgerätes 10 ist sein Fahrwerk eigentlich sehr niedrig, weil der Rahmen 70 flach ist und weil die Drehbühne 30 ebenfalls flach ausgeführt ist. Diese Ausführung des Fahrwerkes 12 nimmt daher auch nur sehr wenig Platz under den Fächern 6 der Gestelle 1 in Anspruch.

Bei der Verwendung der beschriebenen Stapelgeräte ist es zweckmässig, die Aufhängung der Kragarme 6 an den L-förmigen Stützen 3 in einer besonderen Weise zu gestalten. Diese Art und Weise der Aufhängung ist aus Fig. 11 und 12 ersichtlich. Die Schenkel der L-förmigen Stütze 3 sind aus U-Profilen, so dass die zu befestigende Endpartie 79 der Kragarme 6 zwischen den zwei Seitenwänden 80 und 81 des U-Profils angeordnet sein kann. In den Seitenwänden 81 und 82 des vertikalen Schenkels 5 der L-förmigen Stütze 3 sind Bolzen 83 übereinander und in gleichen Abständen voneinander befestigt, die sich zwischen den genannten Wänden 80 und 81 erstrecken.

Der Grundkörper des Kragarmes 6 weist ein I-Profil auf, wobei die Breite der horizontalen Stege 85 und 86 dieses Profilskörpers kleiner ist als der Abstand zwischen den Wänden 80 und 81 des Holmes 5. Auf der Oberseite des oberen horizontalen Steges 85 ist ein Anschlag 87, beispielsweise durch Schweissen, befestigt, und zwar ganz am Ende des genannten Steges 85. Dieser Anschlag 87 hintergreift einen der Bolzen 83 der Stütze 3. Der sich darunter befindliche Teil des vertikalen Steges 88 des Kragarmes 6 ist nach vorne abgeschrägt, wobei diese Abschrägung eine Stufe 89 aufweist, über welche diese Endpartie 79 des Kragarmes 6 auf einem tiefer liegenden Bolzen 83 aufliegt. Die genannte Abschrägung setzt sich dann fort und an deren Ende ist ein Auflagestück 90 bündig mit der Unterseite des unteren Steges 86 des Kragarmes 6 befestigt. Die Länge dieses Auflagestückes 90 ist grösser als der Abstand zwischen den Wänden 81 und 82 der Stütze 3.

Beim Einsetzen des Kragarmes 6 in die Stütze 3 wird die Spitze des Kragarmes 6 zunächst angehoben und dann wird die Endpartie 79 desselben zwischen zwei Bolzen 83 eingeführt, die sich in der gewünschten Höhe des Gestelles befinden. Hiernach wird der Anschlag 87 hinter den oberen Bolzen 83 geschoben, so dass der Anschlag 87 auf der Oberseite des Kragarmes 6 wie ein Haken wirkt. Dann wird die Spitze des Kragarmes 6 freigelassen, so dass unter der Einwirkung des Eigengewichtes des vorderen Teiles des Kragarmes 6 dieser zunächst zur Auflage auf dem unteren Bolzen 83 kommt. Schliesslich kommt das Auflagestück 90 des Kragarmes zum Aufliegen auf die vordere Kante der Seitenwände 81 und 82 der Stütze 3. Jetzt ist der Kragarm 6 zur Aufnahme von Lagergut bereit.

Ein solcher Kragarm 6 ist sehr einfach ausgebildet und wegen dem genannten Auflagestück 90 ist er hoch belastbar. Das Anbringen des Armes 6 bzw. dessen Versetzung an der Stütze 3 kann, wie dies aus dem Vorstehenden hervorgeht, sehr einfach durchgeführt werden.

Bei einem so langen und zugleich eigentlich schmalen Fahrwerk ist es allerdings nicht immer leicht, dieses entlang der Reihe von Lagergestellen beispielsweise schnell zu bewegen, weil das Fahrwerk unter Umständen ecken kann. Ausserdem ist es umständlich, die Fahrschienen bzw. auch die Räder des Fahrwerkes in dem sehr niedrigen Raum unter den Gestellen zu warten. Die nachstehend beschriebene Ausführungsform der Lagereinrichtung weist solche Nachteile nicht auf.

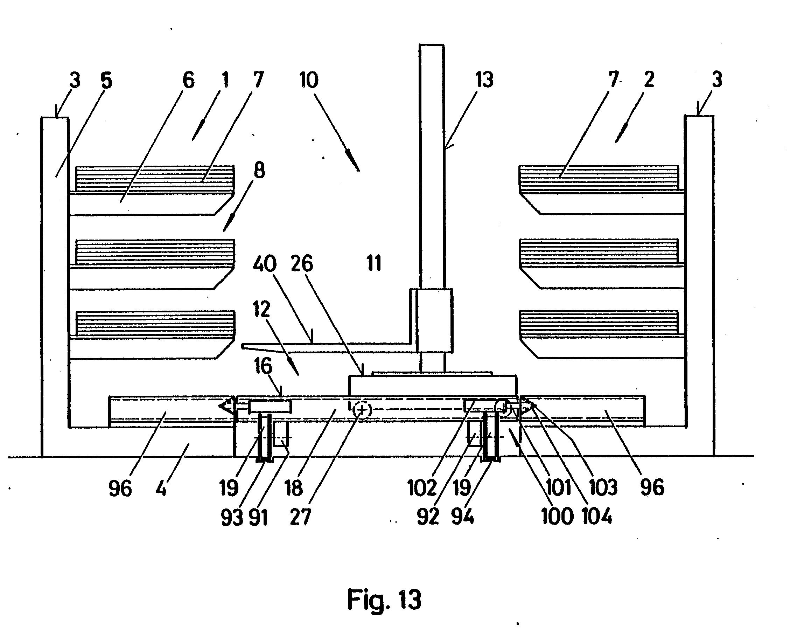

Fig. 13 zeigt eine Lagereinrichtung, die zwei parallel verlaufende Reihen von Lagergestellen 1 und 2 aufweist. Jedes Gestell 1 bzw. 2 enthält zwei etwa L-förmige Stützen 3, deren horizontaler Schenkel 4 auf dem Boden liegt. In den vertikalen Schenkeln 5 der Stützen sind Kragarme 6 verankert, auf welchen das Lagergut 7 ruht. Im hier behandelten Fall stellt das Lagergut 7 Blechtafeln dar, die Stapel bilden. Das Gut ist in den Fächern 8 des jeweiligen Lagergestelles 1 bzw. 2 gelagert.

Die Lagereinrichtung enthält ferner ein Stapelgerät 10, das sich zwischen den zwei genannten Reihen von Lagergestellen 1 und 2 befindet. Dieses Stapelgerät 10 ist in einem Gang 11 verfahrbar, der seitlich durch die zwei genannten Reihen der Lagergestelle 1 und 2 begrenzt ist. Das Stapelgerät 10 weist ein Fahrwerk 12 sowie einen Hubmast 13 auf. Das Fahrwerk 12 des Stapelgerätes 10 ist flach ausgebildet und es ist nur so lang, dass seine seitlichen Endpartien sich im Bereich der freien Enden der Kragarme 6 der Gestelle 1 und 2, d. h. noch im genannten Gang 11, befinden.

Das Fahrwerk 12 weist, wie bereits gesagt worden ist, zwei parallel zueinander verlaufende Schienen 17 und 18 auf, die etwa quer zur Bewegungsrichtung des Fahrwerkes 12 liegen. Das Profil der Führungsschienen 17 und 18 am Fahrwerk 12 ist U-förmig. Das U-Profil öffnet sich nach innen. Ferner enthält das Fahrwerk 12 Hauptträger 91 und 92, deren Längsrichtung mit der Fahrtrichtung des Fahrwerkes 12 praktisch zusammenfällt. Diese Verbindungsträger 91 und 92 sind auf der Unterseite der Führungsschienen 17 und 18 befestigt und ihre Endpartien stehen von den Führungsschienen 17 und 18 seitlich ab. Diese abstehenden Partien der Verbindungsträger 91 und 92 sind mit Rädern 19 des Fahrwerkes 12 versehen. Diese Räder 19 rollen auf Fahrschienen 93 und 94 ab, die sich im Gang 11 der Lagereinrichtung erstrecken. Die dargestellten Fahrschienen 93 und 94 sind im Boden eingelassen. Die Räder 19 des Fahrwerkes 12 sind durch Motoren (nicht dargestellt) angetrieben, die über ein Untersetzungsgetriebe an die Räder 19 angeschlossen sind.

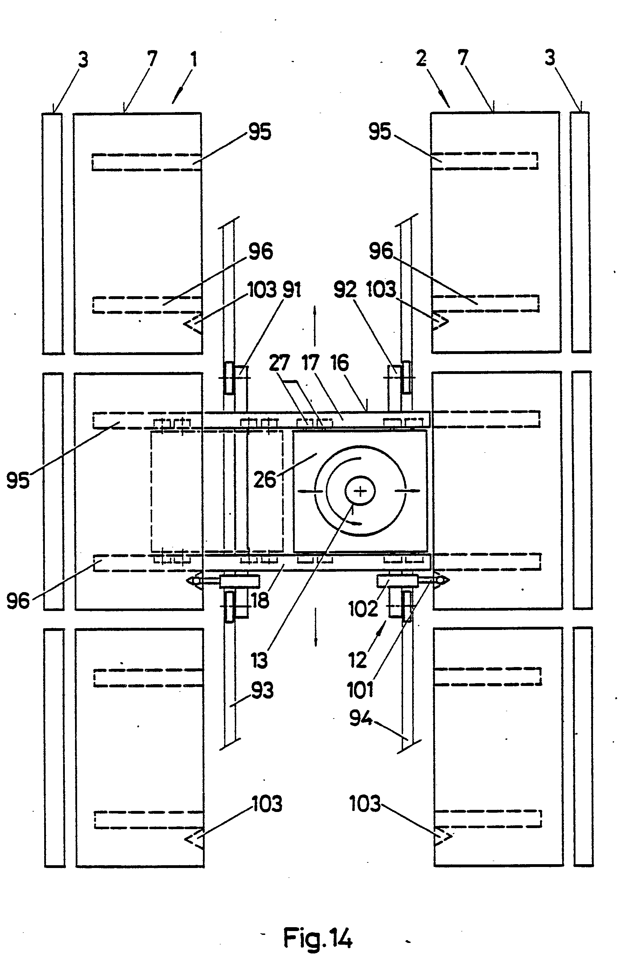

Das Fahrwerk 12 weist ferner die Plattform 26 (Fig. 14) auf, die im wesentlichen flach ausgebildet ist. Im Bereich der Führungsschienen 17 und 18 ist die Plattform 26 mit den Rädern 27 versehen, die sich im Inneren der sich nach innen öffnenden Schienen 17 und 18 mit U-Profil befinden und die mittels Motoren (nicht dargestellt) in der Plattform 26 antreibbar sind. Diese Räder 27 ermöglichen, dass sich die Plattform 26 in Richtung der U-Schienen 17 und 18 und somit auch quer zur Bewegungsrichtung des Fahrwerkes 12 bewegen kann.

Unter dem jeweiligen Lagergestell 1 bzw. 2 befindet sich je ein Paar weiterer Schienen 95 und 96, die senkrecht zur Längsrichtung der jeweiligen Reihe von Lagergestellen 1 bzw. 2 liegen. Der Abstand zwischen diesen weiteren Schienen 95, 96 gleicht dem Abstand zwischen den Führungsschienen 17 und 18 am Fahrwerk 12 und ausserdem sind die zusätzlichen Schienen 95 und 96 unter den Lagergestellen praktisch gleich ausgebildet wie die Führungsschienen 17 und 18 am Fahrwerk 12. Infolgedessen können die Räder 27 der Plattform 26 in die Verlängerungsschienen 95 und 96 unter dem jeweiligen Lagergestell 1 bzw. 2 hineinfahren, wenn die Führungsschienen 17 und 18 des Fahrwerkes 12 mit den Verlängerungsschienen 95 und 96 ausgerichtet sind. Dies ist deswegen von Bedeutung, weil das Fahrwerk 12 selbst, bzw. die Führungsschienen 17 und 18 des Rahmens 16 desselben, verhältnismässig kurz sind, so dass die Führungsschienen 17 und 18 allein es nicht erlauben würden, dass der Lastträger 40 bis unter das Lagergut 7 im betreffenden Lagerfach 8 gelangt. Da die Räder 27 der Plattform 26 in die Verlängerungsschienen 95 und 96 jedoch hineinfahren können, kann sich die Plattform 26 samt der Hubsäule 13 und dem Lastträger 40 gegen das betreffende Lagergestell 1 bzw. 2 hin weiterbewegen, bis der Lastträger 40 unter dem Lagergut 7 bzw. im betreffenden Lagerfach 8 liegt.

Bei einer entsprechenden Einstellung des Lastträgers 40 am Hubmast 13 gelangt dieser unter jenes Lagerfach 8, dem das Lagergut 7 entnommen werden soll. Dann wird der Lastträger 40 aufwärts bewegt, so dass das Lagergut 7 angehoben wird und es kann aus dem Lagerfach 8 ausgefahren werden. Dies geschieht in der Weise, dass die Plattform 26, deren Räder 27 sich in diesem Moment in den Verlängerungsschienen 95 und 96 noch befinden, in den Rahmen 16 des Fahrwerkes 12 zurückfährt. Sobald sich alle Räder 27 der Plattform 26 in den Führungsschienen 17 und 18 des Rahmens 16 des Fahrwerkes 12 befinden, kann sich das Fahrwerk in der einen oder in der anderen Richtung im Gang 11 der Einrichtung bewegen, um das entnommene Lagergut 7 am Ende des Ganges 11 abzugeben. In umgekehrter Weise geht man vor, wenn die sich an einem Ende des Ganges 11 befindliche Ware in einem der Lagerfächer 8 abgelagert werden soll.

Während des Betriebes einer solchen Einrichtung muss die Ausrichtung zwischen den Führungsschienen 17 und 18 am Fahrwerk 12 und den Verlängerungsschienen 95 und 96 unter den betreffenden Lagergestellen 1 bzw. 2 zunächst erreicht und dann während des gesamten Bedienungsvorganges des Lagergestelles auch eingehalten werden. Denn andernfalls würde die Plattform 26 entgleisen, was dann schwerwiegende Folgen haben könnte, wenn diese beladen ist.

Um die genannte Ausrichtung zu erreichen und aufrechtzuerhalten, enthält die Lagereinrichtung Zentriermittel 100. Diese Mittel 100 können in verschiedener Weise ausgebildet sein. Im dargestellten Beispiel enthalten diese Mittel Bolzen 101, die am Fahrwerk 12 angebracht sind und die mit Hilfe von Hubzylindern 102 betätigbar sind. Die Zentriermittel 100 sind ortsfest und sie enthalten ferner hohle Glieder 103 mit Hohlräumen bzw. Ausnehmungen 104. Solche Glieder 103 befinden sich unter dem jeweiligen Gestell 1 bzw. 2. Im dargestellten Beispiel sind die Zentriermittel 100 im Bereich nur einer Seite des Fahrwerkes 12 und zwar zu den beiden Seiten des Ganges 11 angeordnet. Die ortsfesten Glieder 103 mit der Ausnehmung 104 sind so angeordnet, dass die Führungsschienen 17 und 18 am Fahrwerk 12 mit den Verlängerungsschienen 95 und 96 genau ausgerichtet sind, wenn die freien Endpartien der durch die Hubzylinder 102 betätigbaren Bolzen 101 auf der tiefsten Stelle der Ausnehmung 104 im hohlen Glied 103 liegen.

Um das Einfahren des Bolzens 101 in die Ausnehmung 104 des gewünschten hohlen Gliedes 103 bei der Annäherung des Fahrwerkes 12 zu erleichtern, sind die Ausnehmungen 104 konisch oder, in einem horizontalen Schnitt gesehen, wenigstens keilförmig ausgebildet. Der durch den Hubzylinder 102 auf den Bolzen 101 ausgeübte Druck ermöglicht, eine exakte Gegenüberstellung der Schienen 17, 18 und 95, 96 in der letzten Phase des Anfahrtsvorganges des Fahrwerkes 12 zu erreichen.

Wie aus der Zeichnung ersichtlich ist, befindet sich unter jedem Gestell 1 bzw. 2 nur ein hohles Glied 103 der Zentriermittel 100. Wenn gewünscht, können sich unter jeweiligem Lagergestell 1 bzw. 2 auch mehrere solche Glieder 103 befinden. Entsprechendes trifft auch für die Bolzen 101 zu. Wenn dies vorteilhaft sein sollte, können die Bolzen 101 unter den Gestellen 1 bzw. 2 und die Glieder 103 mit Ausnehmung 104 dagegen am Fahrwerk 12 angebracht sein.

**Patentansprüche**

1. Lagereinrichtung mit wenigstens einer Reihe von Lagergestellen und mit einem Stapelgerät (10) zur Bedienung dieser Gestelle, das ein entlang den Lagergestellen bewegbares und eine Plattform (26) tragendes Fahrwerk (12) aufweist, wobei die Plattform mit einem vertikal verstellbaren Lastträger (40) versehen ist, der in Richtung gegen die Fächer der Lagergestelle hin und von diesen weg bewegt werden kann, und wobei der Lastträger (40) wenigsten zwei Lagen in einer horizontalen Ebene gegenüber dem Fahrwerk (12) einnehmen kann, dadurch gekennzeichnet, dass das Fahrwerk (12) als ein auf dem Boden der Lagereinrichtung bewegbares Fahrwerk ausgeführt ist, dass wenigstens eine Schiene (20 ; 93 bzw. 94) sich im Bodenbereich der Lagereinrichtung befindet, welche zur Führung von Laufrädern (19) am Fahrwerk bestimmt ist, dass die Länge des Fahrwerks (12) der Breite des Ganges (11) zumindest gleicht, in dem sich das Stapelgerät (10) bewegen kann, wobei ein Teil des Fahrwerkes sich im Bereich der Fächer der Lagergestelle befindet, dass auf der Oberseite der Plattform (26) ein Hubmast (13 ; 55 ; 60) aufgerichtet ist, entlang welchem der Lastträger (40) bewegbar ist, dass die Breite des Ganges (11) der Tiefe des Lastträgers (40) plus der Tiefe des Hubmastes (13 ; 55 ; 60) gleicht oder ein wenig grösser als diese ist und dass das Fahrwerk (12) so ausgeführt ist, dass die Plattform (26) in das Lagergestell (1 bzw. 2) einfahren kann.

2. Einrichtung nach Anspruch 1, dadurch gekennzeichnet, dass das Fahrwerk (12) einen Rahmen (16) aufweist, dessen Längsseiten (14, 15)
mit den Laufrädern (19) versehen sind, dass die
Querseiten (17, 18) des Rahmens (16) als Schienen ausgeführt sind und quer zur vorgesehenen
Bewegungsrichtung des Fahrwerkes (12) verlaufen und dass die Plattform (26) entlang den
Rahmenquerseiten (17, 18) verschiebbar ist.

3. Einrichtung nach Anspruch 1, dadurch gekennzeichnet, dass das Fahrwerk (12) einen Rahmen (70) aufweist, dessen Längsseiten (14, 15)
mit Laufrädern (19 ; 72) versehen sind, dass
dieser Rahmen (70) Stangen (75, 76) enthält,
welche sich quer zur Bewegungsrichtung des
Fahrwerkes erstrecken, dass der Rahmen (70)
ferner eine praktisch hohle Endpartie (71) aufweist, welche als die Plattform dient, wobei eine
der Randpartien dieser Plattform (71) eine der
Längsseiten des Rahmens (70) darstellt und mit
den Laufrädern (72) versehen ist, welche vorteilhaft Schwenkrollen sind, dass die Querseiten der
Plattform (71) mit Gehäusen (73, 74) versehen
sind, in welche die Stangen (75, 76) einerends
einschiebbar sind, und dass Mittel (77, 78, 79, 80,
81) vorgesehen sind, welche die Bewegung der
Stangen in den Gehäusen (73, 74) und somit auch
die Verstellung der Plattform (71) gegenüber dem
Lagergestell (1 bzw. 2) ermöglichen.

4. Einrichtung nach einem der Ansprüche 2
oder 3, dadurch gekennzeichnet, dass die Länge
des Rahmens (16 ; 70) quer zur Bewegungsrichtung des Fahrwerks (12) grösser ist als die Breite
des Ganges (11) und dass wenigstens eine der
seitlichen Endpartien (14) des Rahmens sich unter
den Fächern der Lagergestelle (1 bzw. 2) befindet.

5. Einrichtung nach einem der Ansprüche 2
oder 3, dadurch gekennzeichnet, dass die Länge
des Rahmens (16) quer zur Bewegungsrichtung
des Fahrwerkes (12) höchstens gleich gross ist
wie die Breite des Ganges (11) und dass die
Laufräder (19) des Fahrwerkes (12) sich im Bereich der vorderen Enden der Fächer in den
Lagergestellen (1 bzw. 2) befinden, wo sie durch
Schienen (93, 94) geführt sind.

6. Einrichtung nach Anspruch 1, dadurch gekennzeichnet, dass der Lastträger (40) wenigstens
eine vertikal gerichtete Hülse (42, 43 ; 57) aufweist, dass diese Hülse den Hubmast (13) bzw. die
jeweilige Säule (34, 35 ; 55) desselben umgibt,
dass der Lastträger (40) ferner einen Längsträger
(41) aufweist, der an die jeweilige Hülse angeschlossen ist, dass Zinken (44 ; 62 ; 67) am Längsträger (41) angebracht sind, die zur Abstützung
der Last dienen, und dass Mittel (45, 46, 47, 48, 49,
51, 52) zur Höhenverstellung des Lastträgers (40)
vorgesehen sind.

7. Einrichtung nach Anspruch 1, dadurch gekennzeichnet, dass der Hubmast (13) vorteilhaft
kastenförmige und sich in einem Abstand voneinander befindliche Säulen (34, 35) aufweist, dass
der Lastträger (40) entlang diesen Säulen (34, 35) bewegbar ist und dass die quer bewegbare Plattform (26) mit einer drehbaren Bühne (30) versehen ist, auf der der Hubmast (13) befestigt ist.

8. Einrichtung nach Anspruch 1, dadurch gekennzeichnet, dass der Hubmast (55) als eine
Säule mit rundem Querschnitt ausgebildet ist,
dass diese Säule an der quer bewegbaren Plattform (26) befestigt ist und dass der Lastträger (56)
derart ausgebildet ist, dass er um diese Säule (55)
herum drehbar ist.

9. Einrichtung nach Anspruch 1, dadurch gekennzeichnet, dass der Hubmast (60) wenigstens
eine Säule aufweist, welche auf der quer bewegbaren Plattform (26) befestigt ist, und dass der
Lastträger (40) Zinken (62 ; 67) aufweist, welche
darart verstellbar sind, dass sie einander gegenüberliegende Lagen hinsichtlich der Säule in
derselben horizontalen Ebene einnehmen kön--
nen. (Fig. 7 und 8)

10. Einrichtung nach Anspruch 9, dadurch gekennzeichnet, dass der Längsträger des Lastträgers (40) als eine Achse (61) ausgebildet ist, dass
der jeweilige Zinken (62) mit einem Auge (63)
versehen ist, durch welches die Achse (61) hindurchgeht, und dass der Lastträger ferner horizontale Anschläge (64, 65) für die Zinken (62)
aufweist.

11. Einrichtung nach Anspruch 9, dadurch gekennzeichnet, dass der Längsträger des Lastträgers (40) mit horizontal gerichteten Hülsen (66)
versehen ist, dass durch die jeweilige horizontale
Hülse (66) einer der Zinken (67) hindurchgeht,
dass der Zinke mit einer Zahnung (68) versehen
ist und dass die Hülse (66) mit einem antreibbaren
Zahnrad (69) versehen ist, das mit der Zahnung
(68) am Zinken (6) kämmt.

12. Einrichtung nach Anspruch 1, dadurch gekennzeichnet, dass die Lagergestelle (1, 2) praktisch L-förmige Stützen (3) aufweisen und dass an
diesen Stützen (3) Kragarme (6) angebracht sind,
auf welchen das Lagergut (7) ruht.

13. Einrichtung nach Anspruch 12, dadurch
gekennzeichnet, dass der vertikale Schenkel (5)
der Stützen (3) doppelwandig ist, dass sich Bolzen
(83) zwischen den Wänden (81, 82) des vertikalen
Stützenschenkels (5) erstrecken, die übereinander angeordnet und in diesen Wänden befestigt
sind, und dass zwischen zwei Bolzen (83) die
Endpartie eines Kragarmes (6) einsteckbar ist.

14. Einrichtung nach Anspruch 1, dadurch gekennzeichnet, dass das Stapelgerät (10) eine
Antriebsvorrichtung (28, 31) aufweist, die derart
ausgeführt ist, dass die quer zur Bewegungsrichtunt des Fahrwerkes (12) bewegbare Plattform
(26 ; 71) gleichzeitig mit der Verstellung des
Lastträgers (40) in einer horizontalen Ebene bewegt werden kann.

15. Einrichtung nach Anspruch 5, dadurch gekennzeichnet, dass unter dem jeweiligen Lagergestell sich Paare von Verlängerungsschienen (95,
96) befinden, die senkrecht zur vorgesehenen
Bewegungsrichtung des Fahrwerks (12) verlaufen, dass der Abstand zwischen diesen Verlängerungsschienen (95, 96) dem Abstand zwischen
den Querschienen (17, 18) am Rahmen (16) praktisch gleicht, dass die Querseiten (17, 18) des Rahmens (16) derart ausgeführt sind, dass die Plattform (26) die Führungsteile (17, 18) des Rahmens verlassen und in die Verlängerungsschienen (95, 96) hineinfahren kann, und dass Mittel (100) zur Positionierung des Rahmens (16) gegenüber dem jeweiligen Paar der Verlängerungsschienen (95, 96) vorgesehen sind.

16. Einrichtung nach Anspruch 1, dadurch gekennzeichnet, dass im Bereich der Laufräder (19) sich Führungsrollen (24, 25) befinden, welche auf den Seitenflächen der Schienen (20 bzw. 21) aufliegen.

17. Einrichtung nach Anspruch 4, dadurch gekennzeichnet, dass das zuunterst liegende Fach des Lagergestelles (1 bzw. 2) sich in einem Abstand vom Boden der Lagereinrichtung befindet, so dass unter diesen Fächern sich ein Abschnitt (14 bzw. 15) des Fahrwerkes (12) befinden kann.

## Claims

1. Storage device with at least one row of storage racks, and having a stacking device (10) for serving these racks, which has a travelling unit (12) which can be moved along the storage racks and bears a platform (26), said platform being provided with a vertically adjustable load carrier (40), which can be moved towards and away from the compartments of the storage racks, and which load carrier (40) can take up at least two positions in a horizontal plane relative to the travelling unit (12), characterized in that the travelling unit (12) is designed as a travelling unit which can be moved on the bottom of the storage device, in that at least one rail (20 ; 93 or 94), intended for the guidance of runners (19) on the travelling unit, is provided in the bottom region of the storage device, in that the length of the travelling unit (12) is at least equal to the width of the aisle (11) in which the stacking device (10) can move, while a part of the travelling unit is in the region of the compartments of the storage racks, in that disposed on the top side of the platform (26) is a lifting mast (13 ; 55 ; 60) along which the load carrier (40) can be moved, in that the width of the aisle (11) is equal to the depth of the load carrier (40) plus the depth of the lifting mast (13 ; 55 ; 60) or a little greater than it, and in that the travelling unit (12) is designed in such a way that the platform (26) can travel into the storage rack (1, 2).

2. Device according to Claim 1, characterized in that the travelling unit (12) has a frame (16) whose longitudinal sides (14, 15) are provided with the runners (19), in that the transverse sides (17, 18) of the frame (16) are designed as rails and run at right angles to the direction of movement provided for the travelling unit (12), and in that the platform (26) can be pushed along the transverse sides (17, 18) of the frame.

3. Device according to Claim 1, characterized in that the travelling unit (12) has a frame (70) whose longitudinal sides (14, 15) are provided with runners (19 ; 72), in that said frame (70) contains bars (75, 76) extending at right angles to the direction of movement of the travelling unit, in that the frame (70) also has a practically hollow end part (71) serving as the platform, one of the edge parts of this platform (71) constituting one of the longitudinal sides of the frame (70) and being provided with the runners (72), which are advantageously castors, in that the transverse sides of the platform (71) are provided with housings (73, 74) into which the bars (75, 76) can be pushed at one end, and in that provision is made for means (77, 78, 79, 80, 81) which permit the movement of the bars in the housings (73, 74), and thus also the adjustment of the platform (71) relative to the storage rack (1, 2).

4. Device according to one of Claims 2 or 3, characterized in that the length of the frame (16 ; 70) at right angles to the direction of movement of the travelling unit (12) is greater than the width of the aisle (11), and in that at least one of the lateral end parts (14) of the frame is under the compartments of the storage racks (1, 2).

5. Device according to one of Claims 2 or 3, characterized in that the length of the frame (16) at right angles to the direction of movement of the travelling unit (12) is at most the same as the width of the aisle (11), and in that the runners (19) of the travelling unit (12) are in the region of the front ends of the compartments in the storage racks (1, 2), where they are guided by rails (93, 94).

6. Device according to Claim 1, characterized in that the load carrier (40) has at least one vertically directed sleeve (42, 43 ; 57), in that this sleeve encloses the lifting mast (13) or the appropriate column (34, 35 ; 55) thereof, in that the load carrier (40) also has a longitudinal carrier (41) which is connected to the appropriate sleeve, in that tenons (44 ; 62 ; 67) serving to support the load are disposed on the longitudinal carrier (41), and in that means (45, 46, 47, 48, 49, 51, 52) are provided for the vertical adjustment of the load carrier (40).

7. Device according to Claim 1, characterized in that the lifting mast (13) advantageously has box-shaped columns (34, 35) which are spaced apart from each other the load carrier (40) can be moved along these columns (34, 35), and in that the transversely movable platform (26) is provided with a rotatable platform (30) on which the lifting mast (13) is fixed.

8. Device according to Claim 1, characterized in that the lifting mast (55) is designed as a column with round cross section, in that this column is fixed on the transversely movable platform (26), and in that the load carrier (56) is designed in such a way that it can rotate about said column (55).

9. Device according to Claim 1, characterized in that the lifting mast (60) has at least one column which is fixed on the transversely movable platform (26), and in that the load carrier (40) has tenons (62 ; 67) which are adjustable in such a way that they can take up opposite positions as regards the column in the same horizontal plane (Figs. 7 and 8).

10. Device according to Claim 9, characterized in that the longitudinal carrier of the load carrier (40) is designed as a shaft (61), in that the tenon (62) in each case is provided with an eye (63) through which the shaft (61) passes, and in that the load carrier also has horizontal stops (64, 65) for the tenons (62).

11. Device according to Claim 9, characterized in that the longitudinal carrier of the load carrier (40) is provided with horizontally directed sleeves (66), in that one of the tenons (67) passes through the appropriate horizontal sleeve (66), in that the tenon is provided with a toothing (68), and in that the sleeve (66) is provided with a drivable gear wheel (69) which meshes with the toothing (68) on the tenon (6) (sic).

12. Device according to Claim 1, characterized in that the storage racks (1, 2) have practically L-shaped supports (3), and in that these supports (3) have fitted on them brackets (6) on which the storage material (7) rests.

13. Device according to Claim 12, characterized in that the vertical leg (5) of the supports (3) is double-walled, bolts (83) which are disposed above one another and fixed in these walls extend between the walls (81, 82) of the vertical support leg (5), and in that the end part of a bracket (6) can be inserted between two bolts (83).

14. Device according to Claim 1, characterized in that the stacking device (10) has a drive unit (28, 31) which is designed in such a way that the platform (26 ; 71) which can be moved at right angles to the direction of movement of the travelling unit (12) can be moved in a horizontal plane at the same time as the adjustment of the load carrier (40).

15. Device according to Claim 5, characterized in that located below the appropriate storage rack are pairs of extension rails (95, 96) running vertically to the direction of movement provided for the travelling unit (12), in that the distance between these extension rails (95, 96) is virtually the same as the distance between the transverse rails (17, 18) on the frame (16), the transverse sides (17, 18) of the frame (16) are designed in such a way that the platform (26) can leave the guide parts (17, 18) of the frame and travel into the extension rails (95, 96), and in that means (100) are provided for positioning the frame (16) relative to the appropriate pair of extension rails (95, 96).

16. Device according to Claim 1, characterized in that in the region of the runners (19) there are guide rollers (24, 25) which rest on the side faces of the rails (20, 21).

17. Device according to Claim 4, characterized in that the bottom compartment of the storage rack (1, 2) is at a distance from the bottom of the storage device, so that a section (14, 15) of the travelling unit (12) can be located below these compartments.

## Revendications

1. Installation de stockage comportant au moins une rangée de rayonnages ainsi qu'un empileur (10) de desserte de ces rayonnages, qui comporte un mécanisme de translation (12) se déplaçant le long des rayonnages et portant une plate-forme (20), la plate-forme étant pourvue d'un porte-charges (40) mobile verticalement, qui peut être déplacé en direction des rayons des rayonnages et à partir de ceux-ci, et le porte-charges (40) pouvant prendre au moins deux positions par rapport au mécanisme de translation (12), dans un plan horizontal, caractérisée en ce que le mécanisme de translation (12) est conçu pour se déplacer sur le sol de l'installation de stockage, en ce qu'au moins un rail (20 ; 93 ou 94) se trouve dans la zone du sol de l'installation de stockage, pour guider des roues (19) du mécanisme de translation, en ce que la longueur du mécanisme de translation (12) est au moins égale à la largeur de l'allée (11) dans laquelle peut se déplacer l'empileur (10), une partie du mécanisme de translation se trouvant dans la zone des rayons des rayonnages, en ce que sur la face supérieure de la plate-forme (26) se dresse un mât de levage (13 ; 55 ; 60) le long duquel se déplace le porte-charges (40), en ce que la largeur de l'allée (11) est égale à la profondeur du porte-charges (40) augmentée de la profondeur du mât de levage (13 ; 55 ; 60) ou est un peu supérieure à celle-ci, et en ce que le mécanisme de translation (12) est conçu de manière que la plate-forme (26) puisse pénétrer dans le rayonnage (1 ou 2).

2. Installation selon la revendication 1, caractérisée en ce que le mécanisme de translation (12) comporte un châssis (16) dont les grands côtés (14, 15) sont pourvus des roues (19), en ce que les traverses (17, 18) du châssis (16) sont des rails, et sont perpendiculaires à la direction de déplacement prévue pour le mécanisme de translation (12), et en ce que la plate-forme (26) peut coulisser le long des traverses (17, 18) du châssis.

3. Installation selon la revendication 1, caractérisée en ce que le mécanisme de translation (12) comporte un châssis (70) dont les grands côtés (14, 15) sont pourvus de roues (19 ; 72), en ce que ce châssis (70) comprend des tringles (75, 76) qui s'étendent perpendiculairement à la direction de déplacement du mécanisme de translation, en ce que le châssis (70) comporte en outre une partie terminale (71) pratiquement creuse qui sert de plate-forme (71), l'une des parties de bordure de cette plate-forme (71) constituant l'un des grands côtés du châssis (70), et étant pourvue des roues (72) qui sont avantageusement des roues pivotantes, en ce que les traverses de la plate-forme (71) sont pourvues de boîtiers (73, 74) dans lesquels peuvent pénétrer d'un côté les tringles (75, 76), et en ce qu'il est prévu des moyens (77, 78, 79, 80, 81) qui permettent le déplacement des tringles dans les boîtiers (73, 74), et par conséquent aussi le déplacement de la plate-forme (71) par rapport au rayonnage (1 ou 2).

4. Installation selon l'une des revendications 2 ou 3, caractérisée en ce que la longueur du châssis (16 ; 70), perpendiculairement à la direction de déplacement du mécanisme de translation (12), est supérieure à la largeur de l'allée (11), et en ce qu'au moins l'une des parties terminales (14) latérales du châssis se trouve au-dessous des rayons de rayonnages (1 ou 2).

5. Installation selon l'une des revendications 2 ou 3, caractérisée en ce que la longueur du châssis (16) perpendiculairement à la direction de déplacement du mécanisme de translation (12) est au plus égale à la largeur de l'allée (11), et en ce que les roues (19) du mécanisme de translation (12) se trouvent dans la zone des extrémités avant des rayons des rayonnages (1 ou 2), où elles sont guidées par des rails (93, 94).

6. Installation selon la revendication 1, caractérisée en ce que le porte-charges (40) comporte au moins une gaine (42, 43 ; 57) dirigée verticalement, en ce que cette gaine entoure le mât de levage (13) ou sa colonne (34, 35 ; 55) correspondante, en ce que le porte-charges (40) comporte en outre une poutre longitudinale (41) qui se raccorde à la gaine correspondante, en ce que des barreaux (44 ; 62 ; 67) sont placés sur la poutre longitudinale (41) sur lesquels prend appui la charge, et en ce que des moyens (45, 46, 47, 48, 49, 51, 52) sont prévus pour le déplacement en hauteur du porte-charges (40).

7. Installation selon la revendication 1, caractérisée en ce que le mât de levage (13) comporte avantageusement des colonnes (34, 35) en forme de caisson et espacées l'une de l'autre, en ce que le porte-charges (40) se déplace le long de ces colonnes (34, 35), et en ce que la plate-forme (26) se déplaçant transversalement est pourvue d'un plateau (30) tournant qui est fixé sur le mât de levage (13).

8. Installation selon la revendication 1, caractérisée en ce que le mât de levage (55) est une colonne de section transversale ronde, en ce que cette colonne est fixée sur la plate-forme (26) se déplaçant transversalement, et en ce que le porte-charges (56) est conçu de manière à pouvoir tourner autour de cette colonne (55).

9. Installation selon la revendication 1, caractérisée en ce que le mât de levage (60) comporte au moins une colonne qui est fixée sur la plate-forme (26) se déplaçant transversalement, et en ce que le porte-charges (40) comporte des barreaux (62 ; 67) qui peuvent se déplacer de manière à pouvoir prendre des positions opposées l'un à l'autre par rapport à la colonne, dans le même plan horizontal (figures 7 et 8).

10. Installation selon la revendication 9, caractérisée en ce que la poutre longitudinale du porte-charges (40) est un axe (61), en ce que les barreaux (62) correspondants sont pourvus d'un œillet (63) à travers lequel passe l'axe (61), et en ce que le porte-charges comporte en outre des butées (64, 65) horizontales pour les barreaux (62).

11. Installation selon la revendication 9, caractérisée en ce que la poutre longitudinale du porte-charges (40) est pourvue de gaines (66) horizontales, en ce que l'un des barreaux (67) traverse la gaine (66) horizontale concernée, en ce que le barreau est pourvu d'une denture (68), et en ce que la gaine (66) est pourvue d'une roue dentée (69) entraînée, qui engrène avec la denture (68) du barreau (6).

12. Installation selon la revendication 1, caractérisée en ce que les rayonnages (1, 2) comportent des appuis (3) pratiquement en L, et en ce que des bras en porte-à-faux (6) sont placés sur ces appuis (3), bras sur lesquels repose le produit stocké (7).

13. Installation selon la revendication 12, caractérisée en ce que l'aile (5) verticale des appuis (3) est à double paroi, en ce que des taquets (83) qui sont disposés les uns au-dessus des autres, s'étendent entre les parois (81, 82) de l'aile (5) verticale de l'appui, et sont fixés sur ces parois, et en ce que la partie terminale d'un bras en porte-à-faux (6) peut être introduite entre deux taquets (83).

14. Installation selon la revendication 1, caractérisée en ce que l'empileur (10) comporte un dispositif d'entraînement (28, 31) qui est conçu de manière que la plate-forme (26 ; 71) se déplaçant transversalement à la direction de déplacement du mécanisme de translation (12), puisse se déplacer en même temps que le porte-charges (40), dans un plan horizontal.

15. Installation selon la revendication 5, caractérisée en ce que sous le rayonnage concerné, se trouvent des paires de rails de prolongement (95, 96) qui sont perpendiculaires à la direction de déplacement prévue pour le mécanisme de translation (12), en ce que la distance séparant ces rails de prolongement (95, 96) est pratiquement égale à celle séparant les rails transversaux (17, 18) du châssis (16), en ce que les traverses (17, 18) du châssis (16) sont conçues de manière que la plate-forme (26) puisse quitter les éléments de guidage (17, 18) du châssis et s'engager dans les rails de prolongement (95, 96) et en ce que des moyens (100) de positionnement du châssis (16) par rapport à la paire concernée de rails de prolongement (95, 96) sont prévus.

16. Installation selon la revendication 1, caractérisée en ce que des galets de guidage (24, 25) se trouvent dans la zone des roues (19) et reposent sur les faces latérales des rails (20 ou 21).

17. Installation selon la revendication 4, caractérisée en ce que le rayon le plus inférieur du rayonnage (1 ou 2) se trouve à une distance du sol de l'installation de stockage telle que sous ces rayons peut se trouver une section (14 ou 15) du mécanisme de translation (12).

**Fig.1**

**Fig. 2**

Fig. 3

Fig. 4

Fig. 5

Fig.6

Fig. 9

Fig.10

Fig. 7

Fig. 8

4

Fig.12

Fig.11

Fig. 13

EP 0 158 656 B1

Fig.14